# EUROPEAN PATENT SPECIFICATION

(11) **EP 2 986 151 B1**
(45) Date of publication and mention of the grant of the patent: **12.08.2020**
(21) Application number: 14770123.9
(22) Date of filing: 13.03.2014
(51) Int. Cl.: A23L 2/56, A23L 7/196, A23L 13/40, A23D 7/00, A23D 9/007, A21D 10/00, A21D 2/16, A21D 2/18, A23D 7/005, A23D 7/01, A23D 9/013, A23L 19/00, A23L 27/00, A23L 27/60, A23L 13/50

(54) **SUBSTANTIALLY SURFACTANT-FREE, SUBMICRON DISPERSIONS AND FOOD ENHANCEMENT THEREWITH**
IM WESENTLICHEN TENSIDFREIE SUBMIKRONDISPERSIONEN UND NAHRUNGSMITTELANREICHERUNG DAMIT
DISPERSIONS SUBMICRONIQUES SENSIBLEMENT DÉPOURVUES D'AGENTS TENSIOACTIFS ET AMÉLIORATION DES ALIMENTS OBTENUE GRÂCE À CES DISPERSIONS

(30) Priority: 15.03.2013 US 201313835642
(43) Date of publication of application: 24.02.2016
(73) Proprietor: Leading Edge Innovations, LLC, Branchburg, New Jersey 08878 (US)
(72) Inventor: WILMOTT, James Michael, Clinton, New Jersey 08809 (US); ROSS, Michael Alan, Nazareth, Pennsylvania 18064 (US)
(74) Representative: Pallini Gervasi, Diego
(86) International application number: PCT/US2014/025734
(87) International publication number: WO 2014/151442

(56) References cited:
- WO-A2-2007/120500
- AU-A1- 2011 213 719
- US-A- 4 720 390
- US-A- 5 637 291
- US-A- 5 688 528
- US-A- 5 928 632
- US-A1- 2003 215 470
- US-A1- 2003 215 470
- US-A1- 2009 196 972
- US-A1- 2013 064 954

## Description

### FIELD

Embodiments of the present invention generally relate to enhanced food and a method for enhancing food,
wherein the food is contacted with a substantially surfactant-free submicron dispersion of particles of edible hydrophobic agent(s) in an aqueous fluid.

### BACKGROUND

The current practices for combining a hydrophobic material (such as a liquid, semi-solid, or solid) with a hydrophilic liquid requires the addition of agents that change the native properties of both the hydrophobic material and the hydrophilic liquids so that they more closely resemble one another. As the properties of the two phases converge because of the additives, they have a greater propensity to be stable for a commercially viable period of time. An important class of additives that can be used in these hydrophobic phase/hydrophilic phase combinations is the surface active agent, which is typically referred to as a "surfactant". These materials are amphiphilic, having both hydrophobic and hydrophilic properties.

When one or more of these agents are incorporated into either the hydrophobic phase or the hydrophilic phase they will align themselves at the hydrophobic phase-hydrophilic phase interface or at the interface between the composition and the surrounding air. The force that exists at the hydrophobic phase-hydrophilic phase ("Interfacial Tension") is reduced allowing the two phases to more favorably coexist. Similarly, the force that exists at the air-composition interface ("Surface Tension") is also reduced. A special sub-category of surfactants is called an emulsifier. When carefully selected, such emulsifiers have a wide range of surface-active properties. These materials not only lower the interfacial tension at the hydrophobic phase/hydrophilic phase interface but, with the input of shearing energy, they enable the formation of stable droplets of one phase within the other. The resulting product is called an emulsion. In many cases such emulsions are prepared by heating the hydrophobic and hydrophilic phases to a temperature of 70° C. or greater before combining the two phases. The purpose of heating the phases is to ensure that all semi-solid and solid hydrophobic materials used are melted, and that the two phases have a low enough viscosity so the two phases can mix freely. The hydrophobic and hydrophilic phases are typically mixed together until they achieve a homogeneous appearance. Thereafter, they are cooled to ensure the formation of appropriately sized droplets, which is usually in the 3 micron to 10 micron range. Such emulsions typically have a homogeneous, opaque, white appearance due to their particle size.

Although the use of surfactants in the food industry has provided many benefits, the inventors have observed that the use of surfactants to the food industry can have many deficiencies as well. For example, although the many different types of surfactants have yielded a vast array of foods and beverages with desirable properties, the inventors have observed certain undesirable issues associated with their use as well. These issues can produce thermodynamically unstable, non-reproducible and difficult-to-scale emulsions.

The time to develop a traditional emulsifier-based product is lengthy. When changes to either the aqueous phase or oil phase are made, for example due to supply issues or changing consumer preferences, the previously effective emulsifier blend generally must be altered. Such changes may undesirably result in a change in one or more aesthetic, performance, or health properties. Immediate stability of the composition is often compromised as a result and, worse, resulting instability may not be identified until the second or third month of accelerated stability testing. This can compromise the long-term shelf life of the product. Correction requires a complex, often empirical, rebalancing of the formulation.

Compounding these production and stability issues is the effect that processing can have on the outcome of a batch. Emulsion stability is dependent on a variety of parameters such as the zeta potential, particle size, crystal formation and water binding activity of the ingredients employed to achieve the desired rheological properties of the product. These parameters are dependent on the temperature to which the oil and water phases are heated, the rate of heating, the method and rate of mixing of the phases when combined at elevated temperatures, and the rate of cooling. Most emulsions require heating to ensure that all higher melting point materials, such as waxes and butters, are completely melted, dissolved or dispersed in the appropriate phase or to accelerate the hydration of starches and other thickening agents.

Some emulsions are made without heating but these systems preclude the use of higher melting point materials that can add richness to the oral aesthetics of the final product. Further, if the rate of mixing is high, there is a chance that air can be entrapped in the emulsion. This phenomenon causes an undesirable decrease in the specific gravity of the product and an increase in product viscosity. Any variability in processing can lead to a range of undesirable rheological and textural properties. This issue can occur even if the formulation is not modified. Often, if two or more formulators prepare the same product, the resulting compositions may vary considerably. This surprising variation can occur even though each person utilized the same lots of raw ingredients. The unsettling phenomenon occurs because it may be very difficult to exactly reproduce all of the processing parameters used to make an emulsion. If processing variables vary in small, difficult-to-track ways, unexpected particle size variations may occur, or the crystalline properties of the emulsion can be compromised.

Given these concerns, a typical 500-g to 2000-g lab preparation may not translate directly to a manufacturing environment. Moreover, equipment used in the laboratory generally does not well model that used in the plant. There is usually a need for an intermediate development phase during scale-up that facilitates this transition. Some equipment for this intermediate phase is engineered to mimic plant conditions but at a fraction of the size. Even so, scale-up issues abound. To deal with the vagaries of scale-up, the product may be subjected to a wide range of processing variations in order to optimize the conditions of manufacture. Products made at each level of scale-up are typically subjected to accelerated stability testing to ensure the integrity of the product for its anticipated shelf life. These issues increase the time and cost of bringing a new product into production. As a consequence, most formulators tend to stay with certain tried and true approaches of the past, thereby minimizing uniqueness and ingenuity.

Traditional emulsion systems also create difficulties in manufacturing. The need for heating and cooling systems, specialized mixing equipment, and assorted additional processing devices makes the manufacture of emulsion systems capital intensive. Further, the equipment specifications and energy requirements will vary from country to country. This situation will cause a modification in the processing variables thereby making it almost impossible to have a truly "global" manufacturing protocol. The energy needed to process such products can be costly. Similarly, there is typically a long batch processing time. It can take from 5 to 24 hours, or more, to complete the processing of emulsions depending on the batch size and number of sub-phases required. This reality requires intensive labor that adds to cost.

In the surfactant mediated process, the need for high temperature water or steam to heat the phases of the batch can cause damage to heat sensitive hydrophobic agents. Prolonged heating of certain materials can accelerate the reaction of the hydrophobic agent with other components in the emulsion, or with air. For example, unsaturated hydrocarbons, such as vegetable oils, can oxidize, which lead to rancidity or an undesirable color change. Prolonged heating can reduce the potency of hydrophobic nutritional compounds, such as vitamins and antioxidants, as well as modify flavor-providing molecules. In today's market, consumers are less accepting of non-natural stabilizing agents (such as preservatives, artificial flavors or aromas, chelating agents, and synthetic antioxidants) to address these concerns.

The presence of surfactants, preservatives, chelating agents, and other synthetic additives raises safety and health concerns in consumers. These materials are perceived to be artificial and not natural. Their inclusion creates processed food, which has been linked to obesity, diabetes, carcinogenicity, teratology, arthritis, high blood pressure, arteriosclerosis and a compromised immune system. Because of these issues there is rising regulatory pressure and pressure from consumer activists to remove such artificial agents from compositions intended for human consumption.

The presence of emulsifiers in food products as well as the super-micron particle size micelles that they form can also result in a sub-optimal taste sensation and limited textural variability creating a less enjoyable eating or drinking experience

Surfactant micelles, nanospheres, nanoparticles, nanoemulsions, nanocochleates, liposomes, nanoliposomes, and other encapsulating delivery systems have been used to address some of the issues described above. Mozafari, et. al. describe the various ways to make liposomes and nano-liposomes, which are closed, continuous, vesicular structures composed mainly of phospholipid bilayer(s) in an aqueous environment (2008, Journal of Liposomal Research 18:309-327) However, these systems contain either a specific bi-layer structure or other encapsulating techniques such as cyclodextrin entrapment or crosslinked polycarbohydrate encapsulate. Further, the surfactant micelles, nanospheres, nanoparticles and nanoemulsions contain emulsifiers that allow them to achieve their final size. In addition, these systems are all considered to be nano-technology as defined by convention and multiple regulatory agencies (less than 100 nm), giving rise to regulatory issues. There are growing health and safety concerns about the application of nano-technology in foods.
The Australian Patent Application No. 2011213719 A1 discloses a nano-emulsion composition comprising water, an edible oil and a modified starch emulsifier. The nano-emulsion compositions described therein are formed by high energy dispersion and allow enhanced loading of bioactive compounds. The document also discloses food preservative compositions and functional foods comprising the described nano-emulsion composition.

The United States Patent No. 5,688,528 discloses an oil-in-water emulsion comprising
0.01-50% by weight of the total preparation and 0.1-10%, of a galactolipid material as an emulsifier. The galactolipid material consists of at least 50% digalactosyldiacylglycerols, the remainder being other polar lipids. The said emulsion is suitable as a carrier for one or
more active substances in a pharmaceutical composition, but also in nutritional, cosmetical, food and agricultural products.

The International Patent application publication No. WO 2007/120500 A2 discloses emulsions and microcapsules that comprise one or more substances with a low interfacial tension as well as methods of making these emulsions and microcapsules and methods of using them.

Thus, the inventors believe that what are needed are submicron dispersions of hydrophobic agent particles that are substantially surfactant free. What are further needed are submicron dispersions with a particle size that typically exceeds 100 nm in diameter. What are additionally needed are such dispersions that remain stable when diluted in aqueous fluid, and are thus much more flexibly employed in a food preparation process. What is needed is a dispersion concentrate that can be used in the same manner in a laboratory preparation, by an end user, or in a commercially-scaled preparation. What is needed is a dispersion concentrate that can be readily used in a beverage. What are needed are submicron dispersions of hydrophobic agent particles that are reproducible, and reproducibly employed if formed from a given mixture of hydrophobic agent(s) to a certain particle size specification. What are further needed are dispersions that can be made with at most limited heating. What is needed are foods combined with a submicron dispersion of hydrophobic agent, including those having improved texture, taste, nutritional value, odor, appearance, ease of preparation, or cost of production.

Thus, the inventors have provided embodiments of submicron lipid dispersions beneficial for enhancing food that overcome one or more of the problems discussed above and that provide benefits described above.

### SUMMARY

In accordance with the present inventio, there is provided an enhanced food according to claim 1.

In accordance with the present invention, there is further , provided is a method of enhancing food according to claim 12.

### BRIEF DESCRIPTION OF THE DRAWINGS

Embodiments of the present invention, briefly summarized above and discussed in greater detail below, can be understood by reference to the illustrative embodiments of the invention depicted in the appended drawings. It is to be noted, however, that the appended drawings illustrate only typical embodiments of this invention and are therefore not to be considered limiting of its scope, for the invention may admit to other equally effective embodiments.
FIG. 1 is a size distribution for a coconut oil triglycerides dispersion in accordance with some embodiments of the present invention.
FIG. 2 shows a schematic size comparison of a 150-300 nm particle of the invention vs. a 3-5 micron surfactant-based micelle.

To facilitate understanding, identical reference numerals have been used, where possible, to designate identical elements that are common to the figures. The figures are not drawn to scale and may be simplified for clarity. It is contemplated that elements and features of one embodiment may be beneficially incorporated in other embodiments without further recitation.

### DETAILED DESCRIPTION

The direct or surfactant-mediated application of a hydrophobic material to the surface of a solid food may not allow the material to diffuse adequately into the substrate to provide a desired level of benefit. Further, it is very difficult to incorporate hydrophobic material into flour or other similar powdered substrates as the hydrophobic material is coated with the powder making it very difficult to mix uniformly into the system without high energy. The current formulation adds hydrophobic material concurrently in an intimately and uniformly mixed composition.

The dispersion of hydrophobic material of the present invention is formed mechanically, instead of with surfactants. As such, the dispersion can be formed simply of materials found abundantly in organic or naturally derived food.

A "hydrophobic agent" according to the invention has a solubility of less than about 0.1% by weight in water. Generally, the dielectric constant of a material provides a rough measure of a material's polarity. The strong polarity of water is indicated, at 20° C., by a dielectric constant of 80.10. Materials with a dielectric constant of less than 15 are generally considered to be non-polar. In embodiments, the "hydrophobic agent" component(s) are substantially non-polar, in that 90% wt or more are non-polar by this dielectric constant measure. In embodiments, 95% or 99% wt or more of the hydrophobic agent component(s) are non-polar.

Generally vapor pressure is a measure of the volatility of a material at 20° C. as compared with water whose vapor pressure is 2.3 kPa. Hydrophobic agents of the current invention with a vapor pressure less than that of water are considered to be non-volatile. In embodiments, the "hydrophobic agent" component(s) are substantially non-volatile, in that 75% wt or more are non-volatile. In embodiments, 95% or 99% wt or more of the hydrophobic agent component(s) are non-volatile.

A composition is "substantially free of surfactant" according to the invention when the amount of surfactant is not sufficient to materially lower the surface tension of an aqueous fluid, except that amphiphilic compounds with a CMC of 10^{∧}-8 mol/L or lower can be present in amounts of 5 parts weight of other hydrophobic agents, or less. In embodiments where the submicron dispersions of hydrophobic agent particles are substantially free of surfactants, the weight ratio of hydrophobic agent(s) to surfactant molecules(s) other than amphiphilic compounds with a CMC of 10^{∧}-8 mol/L or lower is 10 or more. In embodiments, the ratio is 100 or 200 or 500 or 1000 or more. Such minor amounts of surfactants can be composed of anionic, cationic or non-ionic surfactant molecules.

An "aqueous fluid" according to the invention contains 50% wt water or more, and 0-50% solutes and water miscible solvents, such as in embodiments 75% wt water or more, and 0-25% solutes and water miscible solvents.

An "edible" material according to the invention is one that is generally recognized as safe for human or animal consumption.

"Hydrophobic agent particles" are colloidal droplets of hydrophobic agent(s), wherein at some temperature in the range of 20 to 90° C. the droplets would be liquid.

A "submicron dispersion" is defined as a suspension of hydrophobic agent particles in an aqueous fluid with an average particle size of from 100 nm to 999 nm. According to the present invention, 90% or more, of the hydrophobic agent particles by volume have a size within 200 nm of the average particle size. In embodiments of the invention, 85% or more, or 90% or more, of the hydrophobic agent particles by volume have a size within 150 nm of the average particle size. In embodiments of the invention, 85% or more, or 90% or more, of the hydrophobic agent particles by volume have a size within 100 nm of the average particle size. The hydrophobic agent particles are not included in the water-solvent-solute weight percentages. The submicron dispersion can be as produced by the processes described herein, or as concentrated therefrom, or as diluted therefrom.

The submicron dispersions of hydrophobic agent particles can be "contacted" with food products. The meaning of "contacted" will be understood by those of skill in the art, and includes being applied onto or into the food substrate using any commercially-viable process.

The submicron dispersions of hydrophobic agent particles can include one or more amphiphilic compounds with a CMC of 10^{∧}-8 mol/L or lower. In certain embodiments, examples of these amphiphilic compounds include but are not limited to one or more phospholipids having a net neutral charge at pH 7.4, such as phosphatidylcholine or phosphatidylethanolamine. In certain embodiments, the amphiphilic compound(s) are for example, without limitation, one or more phospholipids having a net negative charge at pH 7.4, such as a phosphatidylinosiitide, phosphatidylglycerol, or phosphatidic acid.

The amount of phospholipid can be from 0.1% (wt) or 1% (wt) to 15% (wt), as a percentage of the total phospholipid+hydrophobic agent that is not phospholipid. Such phospholipid can contain either saturated or unsaturated fatty acyl chains. The phospholipids may be subjected to the process of hydrogenation to minimize the level of unsaturation thereby enhancing their resistance to oxidation. Exemplary sources of hydrogenated phosphatidylcholine (lecithin) include, for example, Basis LP20H lecithin from Ikeda Corp., Japan).

In optional embodiments, the submicron dispersions of hydrophobic agent compositions may be substantially free of polymeric encapsulants such as cyclodextrin in that a given submicron dispersion could be prepared with the same average particle size ±100 nm using the same composition absent the polymeric encapsulants, and be stable for a commercially viable period of time.

The dispersion of the invention may be produced by mixing an aqueous fluid and hydrophobic agents using processing conditions known in the art including but not limited to sonication (Sonic Man, Matrical Bioscience, Spokane, Wash.), high pressure/high shear (e.g., utilizing Microfluidizer, Microfluidics Company, Newton, Mass.), freeze drying (Biochima Biophys Acta 1061:297-303 (1991)), reverse phase evaporation (Microencapsulation 16:251-256 (1999)), and bubble method (J Pharm Sci 83(3):276-280).

In sonication, for example, high intensity sound waves bombard the product for predetermined period of time. In direct sonication, the sonication probe is directly applied into the composition for processing. In indirect sonication, the composition is immersed into an ultrasonic bath, where it is exposed to the processing conditions for a predetermined period of time.

Precipitation utilizes compounds that are poorly-soluble in water, but soluble in organic solvents and surfactants that are water-soluble, to create emulsions. Two separate solutions are formed, one of an organic solvent and compounds, the other a mixture of surfactant dissolved in water. The two solutions are combined and an emulsion is created. The organic solvent is then evaporated out of the emulsion, causing the small spherical particles to precipitate, creating a suspension of submicron particles.

High pressure/high shear utilizes an aqueous phase and a hydrophobic phase. The aqueous phase is prepared into a solution and any other water-soluble or water miscible components are optionally added. The hydrophobic phase is prepared into a mixture with any other non-water miscible or non-water soluble components. The two phases are pre-combined and then subjected to pressure ranging from 10K-50K psi. The composition contains submicron particles.

In freeze drying, two available methods are thin film freezing and spray freeze drying. In spray freeze drying, for example, an aqueous solution containing active ingredients is atomized into the cold gas above a cryogenic liquid. The atomized particles adsorb onto the gas-liquid interface and aggregate there as submicron particles.

The production process is adapted to obtain hydrophobic particles of the appropriate size. The substantially surfactant-free hydrophobic agent particles of the invention, which are typically mechanically created, differ from the typical micelles whose creation is dependent on surfactant. The particles of the dispersion of the invention are believed to be stable primarily due to small size, rather than surfactant effects. This stability enhancement is defined by Stokes' Law which is illustrated in an equation relating the terminal settling or rising velocity of a smooth sphere in a viscous fluid of known density and viscosity to the diameter of the sphere when subjected to a known force field. This equation is V=(2gr<2>)(d1-d2)/9ü, where V=velocity of fall (cm/sec), g=acceleration of gravity (cm/sec<2>), r=radius of particle (cm), d1=density of particle (g/cm<3>), d2=density of medium (g/cm<3>), and ü=viscosity of the medium (dyne sec/cm<2>). Using this equation, with all other factors being constant, a 200 nm hydrophobic agent particle has a velocity of fall that is 680 times slower than one of identical composition having a 5 micron particle size of a standard emulsion.

The composition may be produced with a shear that creates in combination with pressure an average particle size of between about 100 nm to about 999 nm, such as between about 100-500 nm, or 150-300 nm. The process can, for example, without limitation, include a rapid return to atmospheric pressure. In accordance with the present invention, 90% or more, of the particles by volume are within one of the above-cited ranges.

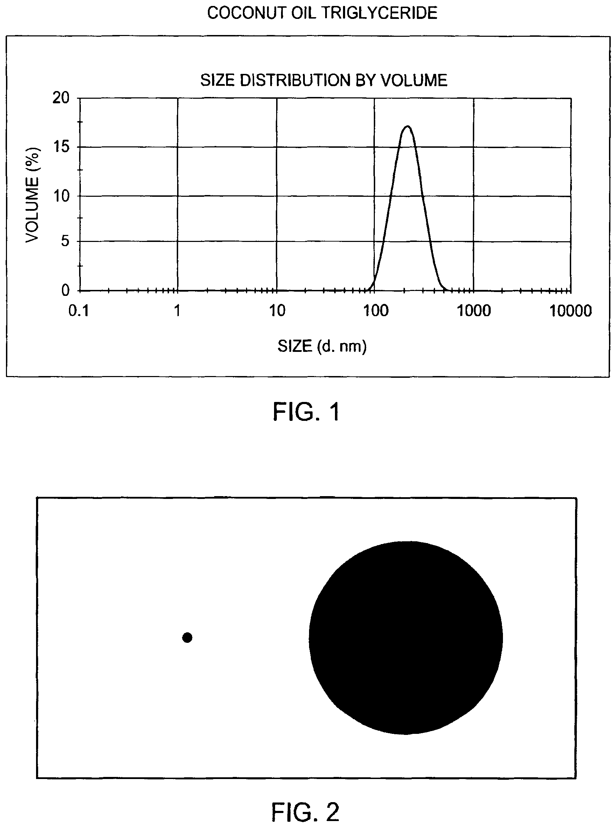

FIG. 1 shows a size distribution for a dispersion of coconut oil triglycerides as measured by a Malvern ZetaSizer particle size analyzer (Malvern Instruments
Ltd. Malvern, UK) which was prepared using a Microfluidizer at 15,000-20,000 psi of pressure. This figure indicates that the mean particle size is 196.4 nm. Sizes recited herein are those determined by dynamic light scattering for spectrum analysis of Doppler shifts under Brownian Motion. Measurements are made using Mie scattering calculations for spherical particles. This reproducible methodology can be conducted with several other available instruments for measuring average particle size and particle size distribution, including instruments from Microtrac (e.g., Nanotrac instrument, Montgomeryville, PA) or Horiba Scientific (Edison, NJ).

The temperature of operation is generally between about 15°C and about 30°C. In certain embodiments, the process avoids temperatures in excess of about 50°C, or in excess of about 60°C. However certain embodiments may require a temperature exceeding 60°C to melt the hydrophobic edible agent.

The dispersion can optionally include a rheological modifying agent. Such agents are known in the art and include, without limitation, those set forth in the following table adapted from www.foodadditives.org/food_gums/common.html:

| **TABLE** - **Rheological Agents** |
|---|
| **Agar-agar** - a gum consisting of two repeating units of polysaccharides: alpha-D-galactopyranosyl and 3,6-anhydro-alpha-L-glactopyranosyl derived from red seaweed. Traditional agar-agar can bind approximately 100 times its weight in water when boiled, forming a strong gel that is often used as a stabilizer or thickener. A recent application of agar-agar is replacing gelatin as the gelling agent in dairy products, such as yogurt. Agar-agar is a non-animal gel source which is suitable for vegetarians and people with religious dietary restrictions (Kosher/Halal). |
| **Alginate** - is a polysaccharide, like starch and cellulose, and is derived from brown seaweed. Alginate provides properties in processed foods and beverages such as gelling, viscosifying, suspending and stabilizing. Alginate gelling may be achieved using calcium under controlled conditions. It employs the combination of alginate, a slowly soluble calcium salt and a suitable calcium sequestrant, such as a phosphate or citrate. The process may be performed at neutral or acid pH. |
| **Carrageenan** - a water soluble gum derived from red seaweeds, such as Eucheuma, Gigartina, and Chondrus. Carrageenan is a sulfated linear polysaccharide of D-galactose and it has a strong negative charge, thereby allowing it to stabilize gels or act as a thickener. Carrageenan is found in numerous products, ranging from toothpaste to soy milk. It is used to suspend cocoa solids in beverages, for example, and can be used in meats to reduce cooking losses. |
| **Cassia Gum** - is a naturally occurring galactomannan found in the endosperm of |
| cassia tora and obtusifolia seeds. It is an effective thickener and stabilizer for a broad range of food applications. Cassia gum has excellent retort stability and forms strong synergistic gels with other hydrocolloids including carrageenan and xanthan gum. Human food grade cassia gum is specially processed to meet rigorous purity standards. |
| **Cellulose Gum** - Carboxymethyl Cellulose (CMC), or cellulose gum is an abundant and natural polysaccharide found in all plants. Cellulose gum is a water-soluble gum that is based on cellulose. Cellulose gum has been used in food products for over 50 years as a thickener and stabilizer. Typical uses are in instant beverages, where it provides texture, baked goods, where it prevents staling, and ice-cream, where it prevents the formation of ice-crystals that can be formed from frequent freezing and rethawing. |
| **Gellan Gum** - a food gum that is primarily used as a gelling or thickening agent. It can be used in fortified beverages to suspend protein, minerals, vitamins, fiber and pulp. Gellan gum also suspends milk solids in diluted milk drinks. Gellan gum can act as a fluid gel, having a wide range of textures, and can exist as a light pourable gel or a thick, spreadable paste. Gellan gum is a non-animal gel source which is suitable for vegetarians and people with religious dietary restrictions (Kosher/Halal). |
| **Guar Gum** - a carbohydrate consisting of mannose and galactose at a 2:1 ratio that can swell in cold water. Guar gum is one of the most highly efficient water-thickening agents available to the food industry and is widely used as a binder and volume enhancer. Its high percentage of soluble dietary fiber (80 to 85%), means that it is often added to bread to increase its soluble dietary fiber content. Guar gum is also commonly used to thicken and stabilize salad dressings and sauces and help improve moisture retention in finished baked goods. |
| **Hydroxypropyl cellulose** - cellulose is an abundant and natural polysaccharide found in all plants. Hydroxypropyl cellulose is based on cellulose and is used in many food products to provide good foam stability. Hydroxypropyl cellulose is commonly found in whipped toppings where it stabilizes the foam and provides a long lasting whipped topping with dairy-like eating quality. |
| **Konjac Gum-** a polysaccharide from a plant known as elephant yam, which is commonly found in Asia. This gum can be used as a vegan substitute for gelatin and other thickeners. Its texture makes it ideal for jellies because of its high viscosity. |
| **Locust Bean Gum** - also called Carob bean gum, locust bean gum is derived from the seeds of the carob bean. Locust bean gum is used for thickening, water-binding, and gel strengthening in a variety of foods. It has synergistic interactions with other gums, such as xanthan or carrageenan, and can be used in applications such as dairy, processed cream cheese, and dessert gels. |
| **Methylcellulose and Hydroxypropyl Methylcellulose** - cellulose is an abundant and natural polysaccharide found in all plants. Methylcellulose and hydroxypropyl methylcellulose are based on cellulose and are used in many food products to provide texture, certain mouth feels and other desirable qualities. These gums are commonly found in soy burgers where they add meat-like texture to the vegetable proteins, in fried appetizers like mozzarella cheese sticks and onion rings where |
| they create firm texture by reducing the uptake of frying oils, and in whipped toppings where they stabilize the foam structure to give long lasting creams. |
| **Microcrystalline cellulose** (MCC) - is a polysaccharide derived from naturally occurring cellulose similar to that found in fruits and vegetables. MCC can be used as a bulking agent, source of fiber and moisture regulator in processed foods. MCC may also be co-processed with carboxymethyl cellulose (CMC) to impart shearthinning and heat stable properties. Additional properties in food and beverages from MCC/CMC co-processed products include gelling, viscosifying, suspending and stabilizing. |
| **Pectin** - a polysaccharide derived from plant material, mainly citrus fruit peels, apple peels, or sugar beets. Pectin is widely used to impart gel formation, thickening, and physical stability to a wide range of foods. It is mostly used in fruit-based products, including jams, jellies, confectioneries, and fruit drinks, but is also used in dairy applications such as drinking and spoonable yogurt. |
| **Xanthan Gum** - a highly branched polysaccharide of D-glucose, D-mannose, and D-glucuronic acid produced via bacterial fermentation using nutrient sources.. Xanthan gum, which is considered natural, is an excellent emulsion stabilizer in salad dressings and sauces and also is used in bakery fillings to prevent water migration from the filling to the pastry (which has strong water-binding properties). Xanthan gum can often be used to improve the shelf life of a product. |

The rheological modifying agent can be present in an amount from 0 to 15% wt, or 0 to 10%, or 0 to 5%, or 0 to 2%, or from 0.01% to 15% wt., or 0.01 to 10%, or 0.01 to 5%, or 0.01 to 2% Rheological modifying agents are added in particular to help immobilize the particles of edible hydrophobic agents for still longer term stability of the submicron dispersions.

Examples of edible hydrophobic agents include but are not limited to mono, di, tri, or poly alkyl (or alkenyl) esters or ethers of a di, tri, or polyhydroxy compound, such as glycerin, sorbitol or other polyol compound. Examples of such esters or ethers include but are not limited to, saturated and unsaturated, linear and branched vegetable oils, such a soybean oil, almond oil, castor oil , canola oil, cottonseed oil, grapeseed oil, rice bran oil, palm oil, coconut oil, palm kernel oil, olive oil, linseed oil, sunflower oil, safflower oil, peanut oil and corn oil. Useful saturated and unsaturated oils include those having 90% or more (molar) fatty acyl components with 6 to 30 carbon atoms, such as 6 to 24 carbons, or 12 to 24 carbons.

Examples of fatty acids providing fatty acyl components, or which provide hydrophobic agents include, without limitation, for example (from www.scientificpsychic.com/fitness/fattyacids.html):

**TABLE: Common Fatty Acids**

| Common Name | Carbon Atoms | Double Bonds | Scientific Name | Sources |
|---|---|---|---|---|
| Butyric acid | 4 | 0 | butanoic acid | butterfat |
| Caproic Acid | 6 | 0 | hexanoic acid | butterfat |
| Caprylic Acid | 8 | 0 | octanoic acid | coconut oil |
| Capric Acid | 10 | 0 | decanoic acid | coconut oil |
| Lauric Acid | 12 | 0 | dodecanoic acid | coconut oil |
| Myristic Acid | 14 | 0 | tetradecanoic acid | palm kernel oil |
| Palmitic Acid | 16 | 0 | hexadecanoic acid | palm oil |
| Palmitoleic Acid | 16 | 1 | 9-hexadecenoic acid | animal fats |
| Stearic Acid | 18 | 0 | octadecanoic acid | animal fats |
| Oleic Acid | 18 | 1 | 9-octadecenoic acid | olive oil |
| Ricinoleic acid | 18 | 1 | 12-hydroxy-9-octadecenoic acid | castor oil |
| Vaccenic Acid | 18 | 1 | 11-octadecenoic acid | butterfat |
| Linoleic Acid | 18 | 2 | 9,12-octadecadienoic acid | grape seed oil |
| Alpha-Linolenic Acid (ALA) | 18 | 3 | 9,12,15-octadecatrienoic acid | flaxseed (linseed) oil |
| Gamma-Linolenic Acid (GLA) | 18 | 3 | 6,9,12-octadecatrienoic acid | borage oil |
| Arachidic Acid | 20 | 0 | eicosanoic acid | peanut oil, fish oil |
| Gadoleic Acid | 20 | 1 | 9-eicosenoic acid | fish oil |
| Arachidonic Acid (AA) | 20 | 4 | 5,8,11,14-eicosatetraenoic | liver fats |
| EPA | 20 | 5 | 5,8,11,14,17-eicosapentaenoic acid | fish oil |
| Behenic acid | 22 | 0 | docosanoic acid | rapeseed oil |
| Erucic acid | 22 | 1 | 13-docosenoic acid | rapeseed oil |
| DHA | 22 | 6 | 4,7,10,13,16,19-docosahexaenoic acid | fish oil |
| Lignoceric acid | 24 | 0 | tetracosanoic acid | small amounts in most fats |

Fatty acyl compositions of some oils useful in the invention, reciting the rounded wt percentage of some leading natural fatty acids, include without limitation the following (from www.scientificpsychic.com/fitness/fattyacids1.html):

**TABLE - Fatty Acid Compositions of Edible Hydrophobic Agents**

| **Oil or Fat** | **Unsat./ Sat. ratio** | **Saturated** | | | | | **Mono unsatur.** | **Poly unsaturated** | |
|---|---|---|---|---|---|---|---|---|---|
| | | Capr. Acid | Laur. Acid | Mryis. Acid | Palm. Acid | Stear. Acid | Oleic Acid | Linoleic Acid (ω6) | Alpha Linolenic Acid (ω3) |
| | | C10:0 | C12:0 | C14:0 | C16:0 | C18:0 | C18:1 | C18:2 | C18:3 |
| Almond Oil | 9.7 | - | - | - | 7 | 2 | 69 | 17 | - |
| Beef Tallow | 0.9 | - | - | 3 | 24 | 19 | 43 | 3 | 1 |
| Butterfat (cow) | 0.5 | 3 | 3 | 11 | 27 | 12 | 29 | 2 | 1 |
| Butterfat (goat) | 0.5 | 7 | 3 | 9 | 25 | 12 | 27 | 3 | 1 |
| Butterfat (human) | 1.0 | 2 | 5 | 8 | 25 | 8 | 35 | 9 | 1 |
| Canola Oil | 15.7 | - | - | - | 4 | 2 | 62 | 22 | 10 |
| Cocoa Butter | 0.6 | - | - | - | 25 | 38 | 32 | 3 | - |
| Cod Liver Oil | 2.9 | - | - | 8 | 17 | - | 22 | 5 | - |
| Coconut Oil | 0.1 | 6 | 47 | 18 | 9 | 3 | 6 | 2 | - |
| Corn Oil (Maize Oil) | 6.7 | - | - | - | 11 | 2 | 28 | 58 | 1 |
| Cottonseed Oil | 2.8 | - | - | 1 | 22 | 3 | 19 | 54 | 1 |
| Flaxseed Oil | 9.0 | - | - | - | 3 | 7 | 21 | 16 | 53 |
| Grape seed Oil | 7.3 | - | - | - | 8 | 4 | 15 | 73 | - |
| Illipe | 0.6 | - | - | - | 17 | 45 | 35 | 1 | - |
| Lard (Pork fat) | 1.2 | - | - | 2 | 26 | 14 | 44 | 10 | - |
| Olive Oil | 4.6 | - | - | - | 13 | 3 | 71 | 10 | 1 |
| Palm Oil | 1.0 | - | - | 1 | 45 | 4 | 40 | 10 | - |
| Palm Olein | 1.3 | - | - | 1 | 37 | 4 | 46 | 11 | - |
| Palm Kernel Oil | 0.2 | 4 | 48 | 16 | 8 | 3 | 15 | 2 | - |
| Peanut Oil | 4.0 | - | - | - | 11 | 2 | 48 | 32 | - |
| Safflower Oil* | 10.1 | - | - | - | 7 | 2 | 13 | 78 | - |
| Sesame Oil | 6.6 | - | - | - | 9 | 4 | 41 | 45 | - |
| Shea nut | 1.1 | - | 1 | - | 4 | 39 | 44 | 5 | - |
| Soybean Oil | 5.7 | - | - | - | 11 | 4 | 24 | 54 | 7 |
| Sunflower Oil* | 7.3 | - | - | - | 7 | 5 | 19 | 68 | 1 |
| Walnut Oil | 5.3 | - | - | - | 11 | 5 | 28 | 51 | 5 |

| | | | | | | | | | |
|---|---|---|---|---|---|---|---|---|---|
| Not high-oleic variety | | | | | | | | | |

In embodiments, without limitation, about 51% wt or more of the edible hydrophobic agent(s) are one or more of the oils identified above. In embodiments, without limitation, about 51% wt or more of the edible hydrophobic agent(s) are canola oil, corn oil, cottonseed oil, flaxseed oil, grape seed oil, peanut oil, safflower oil, sesame oil, soybean oil, sunflower oil, walnut oil, olive oil, peppermint oil, orange oil or a mixture thereof.

The hydrophobic agents can be colorants, including without limitation for example annatto oil, paprika oil, chlorphyll, lycopene, carotenoids. xanthophylls or the like. The hydrophobic agents can be essential nutrients, including without limitation, vitamins such as Vitamin D and its derivatives, Vitamin A and its derivatives, Vitamin E and its derivatives, Vitamin K, Vitamin F, Vitamin P, and the like. Other such nutrients include without limitation for example lipoic acid, lycopene, phospholipids, ceramides, ubiqinone, sterols, flavonoids, cholesterol, sphingolipids, prostaglandins, docosahexaenoic acid, and the like.

The hydrophobic agents can be flavorants, such as, without limitation, terpenes, isoterpenenes, alkyl lactones, essential oils, natural oils such as vanilla, and the like. The hydrophobic agents can be aroma providers that impart aroma to or modify aroma of a food product.

The hydrophobic agents can be artificial fats, such as, without limitation, olestra (sucrose acylated with up to eight fatty acyl groups), polyglycerol fatty acid esters (e.g., R-(OCH2-CH(OR)-CH2O)n-R, where R represents fatty acids and the average value of n is 3), and the like.

The hydrophobic agents are present in the dispersion composition in an amount 0.1% to 70%, by wt.

The dispersions of the invention can be formulated with high load of hydrophobic agent(s), such as 30 or 40%-70% or 30 or 40%-60%, by wt.

In embodiments, a submicron dispersion of hydrophobic agent particles is stored in concentrated form, such as 30 to 70% wt, then diluted relatively nearer to its use in contacting a food. For example, the concentrate can be diluted 1.5, 2, 5, 10, 50, 100, 200, 1000 fold or more. As such, for example, the concentration after dilution can be lower, even significantly lower, such as 0.01% to less than 30% wt.

It is the small size of the dispersion particles that imparts stability. The small size minimizes the tendency of hydrophobic particles to coalesce. The 180 day or more stability described above allows a useful amount of time in which to contact the dispersions with food products. Fig. 3 shows a schematic size comparison of a 150-300 nm particle of the invention vs. a 3-5 micron surfactant-based micelle. Rheological modifying agent(s) can be optionally added to further enhance long-term stability of the edible hydrophobic agent dispersions.

The stability is further manifested in that two or more distinct dispersions can be mixed without upsetting the stability of the various component hydrophobic agent particles, or a dispersion can be diluted into aqueous fluid without upsetting the stability of the component hydrophobic agent particles.

Further, if hydrophobic agent A were not compatible with hydrophobic agent B when mixed, nonetheless a dispersion of the invention of hydrophobic agent A can be mixed with a dispersion of hydrophobic agent B, since the individual particles maintain their integrity. Peppermint Oil and Oleic Acid exemplify such incompatible hydrophobic agents.

The substantially surfactant-free submicron dispersion used in the composition of the present disclosure can be processed until most or all of the particles of the hydrophobic agent are sufficiently small and monodispersed to be on the side of a dispersity barrier where a sufficient quantity of particles are at their (critical or terminal particle size) to minimize the risk of sedimentation or creaming and to make the substantially surfactant-free submicron dispersion stable for commercial applications.

"Electrostatic barrier," as used in this application, means the value at which repulsion forces are equal to coalescing forces for the particles in the dispersion.

The portion (or alternatively, the ratio) of particles that are "over" the electrostatic barrier (i.e., the point at which repulsion forces exceed the coalescing forces in the dispersion), in relation to the total number of particles, is a measure of the stability and quality of the dispersion.

The dispersity barrier can have a different value for each hydrophobic agent, and depends on the physical and chemical properties of the hydrophobic agent.

In an exemplary embodiment, at least 10 wt% of the total particles in the substantially surfactant-free submicron dispersion are over the "dispersity barrier" (meaning that sufficient a sufficient number of particles at size to minimize the risk of sedimentation or creaming for a commercially viable period of time). In another preferred embodiment, 50 wt% or more of the particles are over the dispersity barrier, indicating that the substantially surfactant-free submicron dispersion is more stable relative to the earlier embodiment. In a preferred embodiment, 75 wt% or more of the particles are over the dispersity barrier, indicating that the substantially surfactant-free submicron dispersion is even more stable. In increasingly preferred embodiments, 85 wt% or more, 90 wt% or more, 95 wt% or more, and 99 wt% or more of the particles of the hydrophobic agent(s) are over the dispersity barrier, respectively, indicating substantially surfactant-free submicron dispersions that are increasingly stable.

In an exemplary embodiment of the composition of the present disclosure, at least 75 wt% of the particles of the hydrophobic agent(s) in the oil-in-water substantially surfactant-free submicron dispersion are distributed as a monodispersity about the average particle size, and at least 75 wt% of the particles of the hydrophobic agent are over the dispersity barrier.

In a preferred embodiment of the composition of the present disclosure, at least 90 wt% of the particles of the hydrophobic agent in the oil-in-water substantially surfactant-free submicron dispersion are distributed as a monodispersity about the average particle size, and at least 90 wt% of the particles of the hydrophobic agent are over the dispersity barrier.

Without being bound by theory, it is anticipated that when contacted with food product all or a taste-affecting portion of the particles will be stabilized. It is anticipated that the high surface-to-mass ratio of the particles will accentuate the effect of the hydrophobic agents on taste or aroma or the like. The small size of the hydrophobic agent particles, coupled with their high surface area, is expected to provide greater penetration into food products, again accentuating the effect of the hydrophobic agents on taste or aroma or the like.

When contacted with food, the substantially surfactant-free submicron dispersions of the invention can improve texture, taste, nutrition, aroma, visual properties (e.g., color), volume, moistness, moisture preservation, or the like.

The concentrated or diluted substantially surfactant-free submicron dispersions of edible hydrophobic agents can be applied onto or into the food substrate using any commercially-viable process, such as those well known in the art.

For example, the substantially surfactant-free submicron dispersions can be mixed into milk or milk substitutes (e.g., coconut, soy). Thus, for example, low fat milk can be supplemented with hydrophobic agent dispersions that are highly enriched in heart-healthy polyunsaturated oils. These can enhance the flavor of these milk or milk-like substances without compromising health benefits. Similarly, any number of beverages can be improved. For example, a flavored dispersion can be added to a cocktail to improve nutrition or add flavor (with the flavor for example from oil content or a particularly flavorful hydrophobic agent).

The substantially surfactant-free submicron hydrophobic agent dispersions can provide flavoring for coffee, tea or the like.

When applied to flour, the substantially surfactant-free submicron hydrophobic agent dispersions can provide improved flavor, or improved moisture for products baked therefrom. The dispersion can be mixed with the flour during dough preparation, or premixed.

The substantially surfactant-free submicron hydrophobic agent dispersions can be utilized as marinates, where the small particles are anticipated to effectively penetrate the food product such as meat, or any other edible protein source. The ability of the hydrophobic agent dispersions to mix readily and simply with water enables the hydrophobic agent to diffuse more rapidly into the aqueous content of meat. Treated meats can include without limitation, poultry (such as fowl such as Guinea fowl, quail, chicken, turkey, and waterfowl such as goose, domesticated duck), red meat (such as beef, buffalo, pork, lamb, goat), fish, scallops, other seafood, or the like.

The substantially surfactant-free submicron dispersions can be utilized to modify sauces, soups, for flavor, nutrition, or the like. Surprisingly, the structural integrity of the hydrophobic agent dispersions is retained even when exposed to temperatures exceeding 80°C.

The substantially surfactant-free submicron dispersions can be utilized to modify any food product that is prepared by hydration, with or without heat. Accordingly, the substantially surfactant-free submicron dispersions can be provided in kits sold together with such hydratable food products, or used in a method to prepare such food products. The substantially surfactant-free submicron dispersions can be contacted with the food during the hydration process. Such food products include, without limitation, pastas, rice, other grains, dried fruit or vegetables (such as dried beans), drink concentrates (such as Kool-Aid® or Crystal Light® concentrates), or the like. The kits can include kits with freeze-dried meals, and freeze-dried meals sealed in airtight packages, such as aluminum lined packages. Freeze-dried meals include two or more distinct food types that are not comminuted together, such as meat and pasta, or two distinct vegetables.

The substantially surfactant-free submicron dispersions can be utilized as meat tenderizers that include a denaturant, such as, without limitation, an acid (e.g., vinegar) or a peptidase (e.g., papain).

All ranges recited herein include ranges therebetween, and can be inclusive or exclusive of the endpoints. Optional included ranges are from integer values therebetween (or inclusive of one original endpoint), at the order of magnitude recited or the next smaller order of magnitude. For example, if the lower range value is 0.2, optional included endpoints can be 0.3, 0.4, ... 1.1, 1.2, and the like, as well as 1, 2, 3 and the like; if the higher range is 8, optional included endpoints can be 7, 6, and the like, as well as 7.9, 7.8, and the like. One-sided boundaries, such as 3 or more, similarly include consistent boundaries (or ranges) starting at integer values at the recited order of magnitude or one lower. For example, 3 or more includes 4 or more, or 3.1 or more.

The following embodiments are intended to demonstrate the versatility of substantially surfactant-free submicron dispersions of edible hydrophobic agent(s). These examples can be utilized as presented or can be diluted in water or water miscible solvent to a concentration that is optimized for a given application. They can also be combined in various ratios to provide multiple benefits to the consumer.

### Example 1

A dispersion of the invention was produced from a mixture with the following composition:

| **Raw Material** | **%** |
|---|---|
| Water | 68.750 % |
| Danox 3204 [#449510] (Premier) | 0.050 % |
| Canola Oil (Shopright) | 20.000 % |
| N/A Butter Flavor 222676A (Flavor Solutions Inc) | 10.000 % |
| Basis LP-20H (phospholipid) | 1.000 % |
| Phospholipon 90H (phospholipid) | 0.200 % |
| Totals | 100.00 % |

The substantially surfactant-free submicron dispersion can be readily mixed with naturally sourced flour to provide a butter flavor to baked goods including but not limited to bread, cookies, snacks, and pastries. It can be combined with high unsaturated and saturated hydrophobic agents to produce a butter flavored margarine. Because of the small size of the hydrophobic agent, this dispersion can readily diffuse into substrates including but not limited to: beef, pork, chicken, lamb, turkey, duck, fish, crustaceans, deer, boar, and other protein-based foods to impart a buttery taste. The large surface area of the substantially surfactant-free submicron hydrophobic agent dispersion allows the butter flavor to be presented to the taste buds and receptors with high impact.

### Example 2

A dispersion of the invention was produced from a mixture with the following composition

| **Raw Material** | **%** |
|---|---|
| Miglyol 810N (triglyceride, Sasol) | 15.000 % |
| Lutein Ester Crystals (LycoRed, Prod Code 43367) | 11.000 % |
| Fructose Crystal (Penta, Product Code 06-24000) | 49.600 % |
| Water | 13.550 % |
| KLC 99.7% Glycerin, USP Kosher | 7.100 % |
| Phospholipon 75 (Lipoid) | 3.750 % |
| **Totals** | 100.00 % |

The substantially surfactant-free submicron dispersion provides a composition that enables a hydrophobic nutrient, such as lutein, to be incorporated onto or into the food substrate or beverages to transform the food substrate so that it is more physiologically beneficial to the consumer.

### Example 3

A dispersion of the invention was produced from a mixture with the following composition

| **Raw Material** | % |
|---|---|
| Water | 48.900 % |
| Peppermint Phytobasic in PG (Bio-Botanica) Product# 3315PBPG; Lot# PS-007-023 | 2.500 % |
| Glycerin | 5.000 % |
| Euxyl PE9010 (Schulke) | 1.000 % |
| Potassium Sorbate | 0.250 % |
| Sodium Benzoate | 0.250 % |
| Peppermint NF (Lebermuth Company) Item# 70-9162-23, Lot# 1209001342 | 40.000 % |
| Basis LP-20H | 1.500 % |
| Phospholipon 90H | 0.250 % |
| Keltrol CG-RD | 0.350 % |
| **Totals** | 100.00 % |

The substantially surfactant-free submicron dispersion of a hydrophobic flavor oil provides a peppermint flavor. Due to its submicron particle size and large surface area, it provides a purer, more impactful mint flavor note or provides a notable cooling sensation compared with surfactant-based systems of peppermint oil. This submicron dispersion can also be used in beverages to enhance taste.

### Example 4

A dispersion of the invention was produced from a mixture with the following composition

| **Raw Material** | **%** |
|---|---|
| Water | 53.000 % |
| Food Grade Canola Oil (Restaurant Depot) | 45.000 % |
| Basis LP-20H | 2.000 % |
| **Totals** | 100.00 % |

The dispersion provides a canola oil composition.

### Example 5

A dispersion of the invention was produced from a mixture with the following composition

| **Raw Material** | | % |
|---|---|---|
| Water | | 56.080 % |
| Natrox RO | | 0.100 % |
| Potassium Sorbate | | 0.250 % |
| Sodium Benzoate | | 0.250 % |
| Methylparaben | | 0.200 % |
| Propylparaben | | 0.050 % |
| Disodium EDTA | | 0.050 % |
| Puglia Extra Virgin Olive Oil | | 40.000 % |
| Basis LP-20H | | 1.000 % |
| Keltrol CG-RD | | 0.350 % |
| Citric Acid 30% Aq | | 1.670 % |
| | **Totals** | 100.00 % |

The dispersion provides a olive oil composition.

### Example 6

A dispersion of the invention was produced from a mixture with the following composition

| **Raw Material** | | % |
|---|---|---|
| Water | | 54.700 % |
| Glycerin | | 10.000 % |
| Benzyl Alcohol | | 1.000 % |
| Vitamin E Acetate | | 1.000 % |
| Lipovol G | | 30.000 % |
| Basis LP-20H | | 2.750 % |
| Phospholipon 90H | | 0.250 % |
| Keltrol CG-RD | | 0.300 % |
| | **Totals** | 100.00 % |

The substantially surfactant-free submicron natural oil dispersions found in examples 5, 6, and 7 enhance the flavor, appearance, texture, tenderness, and moistness of proteins. The submicron particle size enables more rapid diffusion of the oil into the meat because it can spread into the moisture already in the meat. This creates a more favorable diffusion force allowing the oil to penetrate more deeply into the protein substrate. These submicron dispersions can also be mixed with vinegar to create a stable salad dressing.

### Example 7

A dispersion of the invention was produced from a mixture with the following composition

| **Raw Material** | | % |
|---|---|---|
| Water | | 59.000 % |
| BFT Orange Oil (Cold Pressed) 2/25/11 | | 40.000 % |
| Basis LP-20H | | 1.000 % |
| | **Totals** | 100.00 % |

The substantially surfactant-free submicron dispersion provides an orange oil composition which can be added to any beverage to impart an orange taste. The submicron dispersion can also be mixed into baked goods to impart an orange flavor to the substrate.

## Claims

1. An enhanced food comprising:
a food or a beverage contacted with a substantially surfactant-free
submicron dispersion of particles of edible hydrophobic agent(s) in an aqueous fluid, wherein the average particle size of the dispersion is 100 to 999 nm, and wherein the edible hydrophobic agent(s) of the dispersion comprise about 0.1% wt to about 70% wt of the dispersion, wherein 90% or more by volume of the edible hydrophobic agent particles
by volume have a size within 200nm of the average particle size,
wherein the dispersion readily dilutes in the aqueous fluid without
upsetting the stability of the hydrophobic agent particles, and
wherein the dispersion is substantially surfactant free such that any
amount of amphiphilic compounds with CMC greater than 10^{∧}-8 mol/L present in the dispersion is not an amount sufficient to materially lower the surface tension of the aqueous-solvent fluid and any amphiphilic compounds present in the dispersion that have a CMC of 10^{∧}-8 mol/L or lower are present in an amount of 5 parts weight of other hydrophobic agents, or less.

2. The enhanced food of claim 1, wherein the dispersion comprises about 0.01% wt. to about 15% wt. of a rheological modifying agent.

3. The enhanced food of claim 1, which is a meat.

4. The enhanced food of claim 3, wherein the dispersion penetrates the meat.

5. The enhanced food of claim 3, wherein the dispersion comprises a denaturant.

6. The enhanced food of claim 1, which is a beverage, soup or sauce.

7. The enhanced food of claim 1, which is a grain flour, or a baked food product comprising a grain flour contacted with the substantially surfactant-free submicron dispersion of particles.

8. The enhanced food of claim 1, wherein the average particle size of the dispersion is about 100 nm to about 500 nm.

9. The enhanced food of claim 1, wherein the edible hydrophobic agent(s) of the dispersion comprise about 0.01 % wt to about 60% wt of the dispersion.

10. The enhanced food of claim 1, wherein the edible hydrophobic agent(s) of the dispersion comprise about 0.50% wt to about 50% wt of the dispersion.

11. The enhanced food of claim 1, wherein the edible hydrophobic agent(s) of the dispersion comprise about 1 % wt to about 45% wt of the dispersion.

12. A method of enhancing food comprising
contacting the food with a substantially surfactant-free submicron dispersion of particles of edible hydrophobic agent(s) in an aqueous fluid, wherein the average particle size of the dispersion is 100 to 999 nm, and wherein the edible hydrophobic agent(s) of the dispersion comprise about 0.1% wt to about 70% wt of the dispersion
wherein 90% or more by volume of the edible hydrophobic agent particles by volume have a size within 200nm of the average particle size,
wherein the dispersion readily dilutes in the aqueous fluid without upsetting the stability of the hydrophobic agent particles, and
wherein the dispersion is substantially surfactant free such that any amount of amphiphilic compounds with CMC greater than 10^{∧}-8 mol/L present in the dispersion is not an amount sufficient to materially lower the surface tension of the aqueous-solvent fluid and any amphiphilic compounds present in the dispersion that have a CMC of 10^{∧}-8 mol/L or lower are present in an amount of 5 parts weight of other hydrophobic agents, or less.

13. The method of claim 12, comprising
providing a first substantially surfactant-free submicron dispersion of particles of edible hydrophobic agent(s) where the average particle size of the dispersion is 100 to 999 nm, wherein the edible hydrophobic agent(s) of the first dispersion comprise about 30% wt to about 70% wt of the first dispersion, diluting the first dispersion to form a second substantially surfactant-free submicron dispersion of edible hydrophobic agents with average particle size of 100 to 999 nm, wherein the second dispersion is more dilute than the first, and thereafter conducting the food contacting using the second dispersion.

14. A kit comprising (a) a food is one adapted to be prepared by hydration and (b) an edible hydrophobic agent dispersion comprising:
a substantially surfactant-free submicron dispersion of particles of edible hydrophobic agent(s) in an aqueous fluid, wherein the average particle size by volume is 100 to 999 nm, and wherein the edible hydrophobic agent(s) comprise about 0.01% wt to about 70% of the dispersion;
wherein 90% or more by volume of the edible hydrophobic agent particles by volume have a size within 200nm of the average particle size;
wherein the dispersion readily dilutes in the aqueous fluid without upsetting the stability of the hydrophobic agent particles, and
wherein the dispersion is substantially surfactant free such that any amount of amphiphilic compounds with CMC greater than 10^{∧}-8 mol/L present in the dispersion is not an amount sufficient to materially lower the surface tension of the aqueous-solvent fluid and any amphiphilic compounds present in the dispersion that have a CMC of 10^{∧}-8 mol/L or lower are present in an amount of 5 parts weight of other hydrophobic agents, or less.

## Patentansprüche

1. Verbessertes Nahrungsmittel, umfassend:
ein Nahrungsmittel oder Getränk, das mit einer im Wesentlichen Tensid-freien Submikron-Dispersion von Partikeln eines essbaren hydrophoben Mittels bzw. essbarer hydrophober Mittel in einer wässrigen Flüssigkeit in Kontakt gebracht worden ist, wobei die durchschnittliche Partikelgröße der Dispersion 100 bis 999 nm beträgt und wobei das essbare hydrophobe Mittel bzw. die essbaren hydrophoben Mittel der Dispersion etwa 0,1 Gew.-% bis etwa 70 Gew.-% der Dispersion ausmachen,
wobei 90 Vol.-% oder mehr der essbare-hydrophobe-Mittel-Partikel bezogen auf Volumen eine Größe innerhalb von 200 nm der durchschnittlichen Partikelgröße besitzen,
wobei die Dispersion sich in der wässrigen Flüssigkeit leicht löst, ohne die Stabilität der hydrophobe-Mittel-Partikel zu beeinträchtigen, und
wobei die Dispersion im Wesentlichen Tensid-frei ist, so dass jegliche Menge in der Dispersion vorhandener amphiphiler Verbindungen mit einer KMK von mehr als 10⁻⁸ mol/l keine ausreichende Menge ist, um die Oberflächenspannung der wässriges-Lösungsmittel-Flüssigkeit zu senken, und jegliche in der Dispersion vorhandenen amphiphilen Verbindungen mit einer KMK von 10⁻⁸ mol/l oder niedriger in einer Menge von 5 Teilen bezogen auf das Gewicht anderer hydrophober Mittel oder weniger vorhanden sind.

2. Verbessertes Nahrungsmittel nach Anspruch 1, wobei die Dispersion etwa 0,01 Gew.-% bis etwa 15 Gew.-% eines Rheologiemodifizierungsmittels umfasst.

3. Verbessertes Nahrungsmittel nach Anspruch 1, das ein Fleisch ist.

4. Verbessertes Nahrungsmittel nach Anspruch 3, wobei die Dispersion das Fleisch durchdringt.

5. Verbessertes Nahrungsmittel nach Anspruch 3, wobei die Dispersion ein Denaturierungsmittel umfasst.

6. Verbessertes Nahrungsmittel nach Anspruch 1, das ein Getränk, eine Suppe oder eine Soße ist.

7. Verbessertes Nahrungsmittel nach Anspruch 1, das ein Getreidemehl oder ein gebackenes Nahrungsprodukt ist, welches ein Getreidemehl umfasst, das mit der im Wesentlichen Tensid-freien Submikron-Dispersion von Partikeln in Kontakt gebracht wurde.

8. Verbessertes Nahrungsmittel nach Anspruch 1, wobei die durchschnittliche Partikelgröße der Dispersion etwa 100 nm bis etwa 500 nm beträgt.

9. Verbessertes Nahrungsmittel nach Anspruch 1, wobei das essbare hydrophobe Mittel bzw. die essbaren hydrophoben Mittel der Dispersion etwa 0,01 Gew.-% bis etwa 60 Gew.-% der Dispersion ausmachen.

10. Verbessertes Nahrungsmittel nach Anspruch 1, wobei das essbare hydrophobe Mittel bzw. die essbaren hydrophoben Mittel der Dispersion etwa 0,50 Gew.-% bis etwa 50 Gew.-% der Dispersion ausmachen.

11. Verbessertes Nahrungsmittel nach Anspruch 1, wobei das essbare hydrophobe Mittel bzw. die essbaren hydrophoben Mittel der Dispersion etwa 1 Gew.-% bis etwa 45 Gew.-% der Dispersion ausmachen.

12. Verfahren zur Verbesserung von Nahrungsmitteln, umfassend
Inkontaktbringen des Nahrungsmittels mit einer im Wesentlichen Tensid-freien Submikron-Dispersion von Partikeln eines essbaren hydrophoben Mittels bzw. essbarer hydrophober Mittel in einer wässrigen Flüssigkeit, wobei die durchschnittliche Partikelgröße der Dispersion 100 bis 999 nm beträgt und wobei das essbare hydrophobe Mittel bzw. die essbaren hydrophoben Mittel der Dispersion etwa 0,1 Gew.-% bis etwa 70 Gew.-% der Dispersion ausmachen,
wobei 90 Vol.-% oder mehr der essbare-hydrophobe-Mittel-Partikel bezogen auf Volumen eine Größe innerhalb von 200 nm der durchschnittlichen Partikelgröße besitzen,
wobei die Dispersion sich in der wässrigen Flüssigkeit leicht löst, ohne die Stabilität der hydrophobe-Mittel-Partikel zu beeinträchtigen, und
wobei die Dispersion im Wesentlichen Tensid-frei ist, so dass jegliche Menge in der Dispersion vorhandener amphiphiler Verbindungen mit einer KMK von mehr als 10⁻⁸ mol/l keine ausreichende Menge ist, um die Oberflächenspannung der wässrige-Lösungsmittel-Flüssigkeit zu senken, und jegliche in der Dispersion vorhandenen amphiphilen Verbindungen mit einer KMK von 10⁻⁸ mol/l oder niedriger in einer Menge von 5 Teilen bezogen auf das Gewicht anderer hydrophober Mittel oder weniger vorhanden sind.

13. Verfahren nach Anspruch 12, umfassend:
Bereitstellen einer ersten im Wesentlichen Tensid-freien Submikron-Dispersion von Partikeln eines essbaren hydrophoben Mittels bzw. essbarer hydrophober Mittel, wobei die durchschnittliche Partikelgröße der Dispersion 100 bis 999 nm beträgt, wobei das essbare hydrophobe Mittel bzw. die essbaren hydrophoben Mittel der ersten Dispersion etwa 30 Gew.-% bis etwa 70 Gew.-% der ersten Dispersion ausmachen, Verdünnen der ersten Dispersion unter Bildung einer zweiten im Wesentlichen Tensid-freien Submikron-Dispersion essbarer hydrophober Mittel mit einer durchschnittlichen Partikelgröße von 100 bis 999 nm, wobei die zweite Dispersion stärker verdünnt ist als die erste, und anschließend das Durchführen des Nahrungsmittel-Inkontaktbringens unter Verwendung der zweiten Dispersion.

14. Kit, umfassend (a) ein Nahrungsmittel ist eines, das dafür ausgelegt ist, durch Hydratisierung hergestellt zu werden, und (b) eine essbare hydrophobe-Mittel-Dispersion, umfassend:
eine im Wesentlichen Tensid-freie Submikron-Dispersion von Partikeln eines essbaren hydrophoben Mittels bzw. essbarer hydrophober Mittel in einer wässrigen Flüssigkeit, wobei die durchschnittliche Partikelgröße bezogen auf Volumen 100 bis 999 nm beträgt und wobei das essbare hydrophobe Mittel bzw. die essbaren hydrophoben Mittel etwa 0,01 Gew.-% bis etwa 70 Gew.-% der Dispersion ausmachen,
wobei 90 Vol.-% oder mehr der essbare-hydrophobe-Mittel-Partikel bezogen auf Volumen eine Größe innerhalb von 200 nm der durchschnittlichen Partikelgröße besitzen,
wobei die Dispersion sich in der wässrigen Flüssigkeit leicht löst, ohne die Stabilität der hydrophobe-Mittel-Partikel zu beeinträchtigen, und
wobei die Dispersion im Wesentlichen Tensid-frei ist, so dass jegliche Menge in der Dispersion vorhandener amphiphiler Verbindungen mit einer KMK von mehr als 10⁻⁸ mol/l keine ausreichende Menge ist, um die Oberflächenspannung der wässrige-Lösungsmittel-Flüssigkeit zu senken, und jegliche in der Dispersion vorhandenen amphiphilen Verbindungen mit einer KMK von 10⁻⁸ mol/l oder niedriger in einer Menge von 5 Teilen bezogen auf das Gewicht anderer hydrophober Mittel oder weniger vorhanden sind.

## Revendications

1. Aliment amélioré comprenant:
un aliment ou une boisson mis en contact avec une dispersion submicronique essentiellement dépourvue d'agents tensioactifs de particules d'un ou de plusieurs agents hydrophobes comestibles dans un fluide aqueux, dans lequel la taille moyenne des particules de la dispersion varie de 100 à 999 nm, et dans lequel le ou les agents hydrophobes comestibles de la dispersion constituent environ 0,1 % en poids à environ 70 % en poids de la dispersion,
dans lequel 90 % ou plus par volume des particules d'agents hydrophobes comestibles par volume ont une taille à l'intérieur de 200 nm de la taille moyenne des particules,
dans lequel la dispersion se dilue facilement dans le fluide aqueux sans perturber la stabilité des particules d'agents hydrophobes, et
dans lequel la dispersion est essentiellement dépourvue d'agents tensioactifs de sorte que toute quantité de composés amphiphiles avec une CMC supérieure à 10⁻⁸ mole/I présente dans la dispersion n'est pas une quantité suffisante pour réduire sensiblement la tension superficielle du fluide hydrosolvant et tout composé amphiphile présent dans la dispersion qui a une CMC de 10⁻⁸ mole/I ou moins est présent en une quantité de 5 parties en poids d'autres agents hydrophobes, ou moins.

2. Aliment amélioré selon la revendication 1, dans lequel la dispersion comprend environ 0,01 % en poids à environ 15 % en poids d'un agent modifiant rhéologique.

3. Aliment amélioré selon la revendication 1, lequel est une viande.

4. Aliment amélioré selon la revendication 3, dans lequel la dispersion pénètre dans la viande.

5. Aliment amélioré selon la revendication 3, dans lequel la dispersion comprend un agent dénaturant.

6. Aliment amélioré selon la revendication 1, lequel est une boisson, une soupe ou une sauce.

7. Aliment amélioré selon la revendication 1, lequel est une farine de grains, ou un produit alimentaire cuit comprenant une farine de grains mise en contact avec la dispersion submicronique essentiellement dépourvue d'agents tensioactifs de particules.

8. Aliment amélioré selon la revendication 1, dans lequel la taille moyenne des particules de la dispersion est d'environ 100 nm à environ 500 nm.

9. Aliment amélioré selon la revendication 1, dans lequel le ou les agents hydrophobes comestibles de la dispersion constituent environ 0,01 % en poids à environ 60 % en poids de la dispersion.

10. Aliment amélioré selon la revendication 1, dans lequel le ou les agents hydrophobes comestibles de la dispersion constituent environ 0,50 % en poids à environ 50 % en poids de la dispersion.

11. Aliment amélioré selon la revendication 1, dans lequel le ou les agents hydrophobes comestibles de la dispersion constituent environ 1 % en poids à environ 45 % en poids de la dispersion.

12. Procédé d'amélioration d'aliments comprenant
la mise en contact de l'aliment avec une dispersion submicronique essentiellement dépourvue d'agents tensioactifs de particules d'un ou de plusieurs agents hydrophobes comestibles dans un fluide aqueux, dans lequel la taille moyenne des particules de la dispersion varie de 100 à 999 nm, et dans lequel le ou les agents hydrophobes comestibles de la dispersion comprennent environ 0,1 % en poids à environ 70 % en poids de la dispersion,
dans lequel 90 % ou plus par volume des particules d'agents hydrophobes comestibles par volume ont une taille à l'intérieur de 200 nm de la taille moyenne des particules,
dans lequel la dispersion se dilue facilement dans le fluide aqueux sans perturber la stabilité des particules d'agents hydrophobes, et
dans lequel la dispersion est essentiellement dépourvue d'agents tensioactifs de sorte que toute quantité de composés amphiphiles avec une CMC supérieure à 10⁻⁸ mole/I présente dans la dispersion n'est pas une quantité suffisante pour réduire sensiblement la tension superficielle du fluide hydrosolvant et tout composé amphiphile présent dans la dispersion qui a une CMC de 10⁻⁸ mole/I ou moins est présent en une quantité de 5 parties en poids d'autres agents hydrophobes, ou moins.

13. Procédé selon la revendication 12, comprenant
la fourniture d'une dispersion submicronique essentiellement dépourvue d'agents hydrophobes comestibles de particules d'un ou de plusieurs agents hydrophobes comestibles, dans lequel la taille moyenne des particules de la dispersion varie de 100 à 999 nm, dans lequel le ou les agents hydrophobes comestibles de la première dispersion constituent environ 30 % en poids à environ 70 % en poids de la première dispersion, diluant la première dispersion pour former une seconde dispersion submicronique essentiellement dépourvue d'agents tensioactifs d'agents hydrophobes comestibles avec une taille moyenne des particules de 100 à 999 nm, dans lequel la seconde dispersion est plus diluée que la première, et effectuant ensuite la mise en contact de l'aliment en utilisant la seconde dispersion.

14. Trousse comprenant (a) un aliment est conçue pour être préparée par hydratation et (b) une dispersion d'agents hydrophobes comestibles comprenant :
une dispersion submicronique essentiellement dépourvue d'agents tensioactifs d'un ou de plusieurs agents hydrophobes comestibles dans un fluide aqueux, dans lequel la taille moyenne des particules par volume est de 100 à 999 nm, et dans lequel le ou les agents hydrophobes comestibles constituent environ 0,01 % en poids à environ 70 % en poids de la dispersion ;
dans laquelle 90 % ou plus par volume des particules d'agents hydrophobes comestibles par volume ont une taille à l'intérieur de 200 nm de la taille moyenne des particules ;
dans lequel la dispersion se dilue facilement dans le fluide aqueux sans perturber la stabilité des particules d'agents hydrophobes, et
dans lequel la dispersion est essentiellement dépourvue d'agents tensioactifs de sorte que toute quantité de composés amphiphiles avec une CMC supérieure à 10⁻⁸ mole/I présente dans la dispersion n'est pas une quantité suffisante pour réduire sensiblement la tension superficielle du fluide hydrosolvant et tout composé amphiphile présent dans la dispersion qui a une CMC de 10⁻⁸ mole/I ou moins est présent en une quantité de 5 parties en poids d'autres agents hydrophobes, ou moins.
